# FASCICULE DE BREVET EUROPEEN

(11) **EP 3 054 568 B1**
(45) Date de publication et mention de la délivrance du brevet: **21.04.2021**
(21) Numéro de dépôt: 16154564.5
(22) Date de dépôt: 05.02.2016
(51) Int. Cl.: H02K 1/20, H02K 9/06, H02K 9/18

(54) **MOTEUR ÉLÉCTRIQUE AVEC RADIATEUR EXTÉRIEUR ET DEUX CIRCUITS DE REFROIDISSEMENT SÉPARÉS**
ELEKTROMOTOR MIT EXTERNEM RADIATOR UND ZWEI GETRENNTEN KÜHLSCHALTKREISEN
ELECTRIC MOTOR WITH EXTERNAL RADIATOR AND TWO SEPARATE COOLING CIRCUITS

(30) Priorité: 06.02.2015 FR 1550941
(43) Date de publication de la demande: 10.08.2016
(73) Titulaire: ALSTOM Transport Technologies, 93400 Saint-Ouen (FR)
(72) Inventeur: RANDRIA, Andry, 25000 BESANCON (FR); RAGUIN, Bruno, 25720 BEURE (FR)
(74) Mandataire: Lavoix

(56) Documents cités:
- EP-A1- 0 387 743
- WO-A1-01/05017
- US-A1- 2004 222 711
- US-A1- 2014 028 124

## Description

La présente invention concerne un moteur électrique, comportant un circuit de refroidissement primaire pour le refroidissement d'un stator et un circuit de refroidissement secondaire pour le refroidissement d'un rotor.

Habituellement, le circuit de refroidissement primaire est en communication fluidique avec l'extérieur du bâti du moteur de sorte à permettre un refroidissement du stator en faisant circuler l'air ambiant dans le circuit de refroidissement primaire. Généralement, le circuit secondaire n'est, quant à lui, pas en communication fluidique avec l'extérieur du bâti du moteur électrique afin d'éviter que des poussières ou autres ne viennent enrayer ou encrasser la partie mobile du moteur. De ce fait, le circuit secondaire est relié à un dispositif de refroidissement s'étendant à l'extérieur du moteur, de sorte à permettre un échange thermique entre le fluide gazeux circulant en circuit fermé dans le circuit secondaire et l'air extérieur par la paroi du dispositif de refroidissement.

Un tel moteur électrique est par exemple décrit dans les documents US6891290 et EP0387743.

Toutefois, l'architecture d'un tel moteur électrique implique que le circuit de refroidissement secondaire du rotor croise le circuit de refroidissement primaire du stator. Ce croisement des deux circuits entrave l'efficacité de refroidissement du circuit de refroidissement primaire du stator car le volume total du circuit de refroidissement primaire doit être limité afin de laisser passer le circuit de refroidissement secondaire.

L'un des buts de l'invention est de proposer un moteur électrique comprenant des circuits de refroidissement permettant un refroidissement efficace et simple du stator et du rotor du moteur électrique.

A cet effet, l'invention a pour objet un moteur électrique, comportant
- un bâti définissant un volume interne dans lequel est logé un rotor et un stator,
- au moins un circuit de refroidissement primaire traversant le stator, comprenant une entrée primaire et une sortie primaire en communication fluidique avec l'extérieur du bâti, un fluide gazeux provenant de l'extérieur du bâti pénétrant par ladite entrée primaire étant destiné à circuler dans ledit circuit de refroidissement primaire et à sortir dudit circuit par ladite sortie primaire,
- au moins un dispositif de refroidissement extérieur au bâti comprenant une entrée d'air secondaire et une sortie d'air secondaire, ladite entrée secondaire et ladite sortie secondaire étant en communication fluidique avec le volume interne du bâti, une conduite, reliant ladite entrée secondaire et ladite sortie secondaire, s'étendant au moins en partie à l'extérieur du bâti,
- au moins un circuit de refroidissement secondaire, séparé du circuit primaire, traversant le rotor et en communication fluidique avec l'entrée secondaire et la sortie secondaire du dispositif de refroidissement, un fluide gazeux interne au circuit de refroidissement secondaire étant destiné à circuler dans ledit circuit de refroidissement secondaire et dans ledit dispositif de refroidissement extérieur,
le circuit de refroidissement secondaire étant traversé par un canal du circuit de refroidissement primaire alimentant le stator avec le fluide gazeux provenant de l'extérieur du bâti, le canal traversant le circuit de refroidissement secondaire transversalement de sorte à séparer un flux gazeux secondaire circulant dans le circuit de refroidissement secondaire en deux flux passant autour du canal caractérisé en ce que le canal comporte une section de forme conique avec un sommet vers l'amont du flux gazeux secondaire et une base vers l'aval.

Les avantages d'un tel moteur électrique sont multiples et sont résumés de manière non-exhaustive ci-dessous.

Le circuit du refroidissement primaire du stator permet de refroidir le stator du moteur électrique de manière efficace, ce qui permet d'augmenter la durée de vie du moteur et/ou de le faire fonctionner à une puissance plus élevée car il n'est plus nécessaire d'interrompre le circuit de refroidissement primaire pour laisser passer le circuit de refroidissement secondaire. Le volume total du circuit de refroidissement primaire est donc augmenté de sorte que la quantité de fluide gazeux de refroidissement est plus importante.

Le circuit primaire selon l'invention permet également d'améliorer le refroidissement du circuit secondaire en permettant d'avoir une deuxième zone d'échange thermique entre l'air extérieur et le fluide gazeux circulant dans le circuit de refroidissement secondaire en plus de la zone d'échange thermique s'étendant à l'extérieur du bâti du moteur. En effet, un échange thermique est établi entre l'air venant de l'extérieur circulant dans le circuit de refroidissement primaire et le fluide gazeux circulant dans le circuit de refroidissement secondaire au niveau du canal du circuit de refroidissement primaire traversant le circuit de refroidissement secondaire.

Avantageusement, un moteur électrique selon l'invention peut comporter l'une ou plusieurs des caractéristiques suivantes, prises seules ou selon toutes combinaisons techniquement envisageables :
- le canal traverse le circuit de refroidissement secondaire principalement dans une direction sensiblement parallèle à un axe de rotation d'un arbre du moteur ;
- le canal est agencé entre l'entrée primaire et une partie du circuit de refroidissement primaire traversant le stator ;
- un ventilateur radial est monté sur l'arbre du moteur pour accélérer un flux gazeux dans le circuit de refroidissement secondaire;
- le ventilateur radial permet d'accélérer simultanément un flux gazeux dans le circuit de refroidissement primaire et un flux gazeux dans le circuit de refroidissement secondaire;
- plusieurs dispositifs de refroidissement extérieur au bâti sont agencés autour du bâti ;
- le ventilateur est configuré pour créer une pression dans le circuit de refroidissement secondaire qui est supérieure à une pression dans le circuit de refroidissement primaire.

L'invention sera mieux comprise à la lecture de la description qui va suivre, donnée uniquement à titre d'exemple et faite en se référant aux dessins sur lesquels :
- la figure 1 est une vue partielle en coupe selon la direction de l'axe de rotation X-X' du rotor ;
- la figure 2 est une vue partielle en coupe selon le plan B-B de la figure 1.

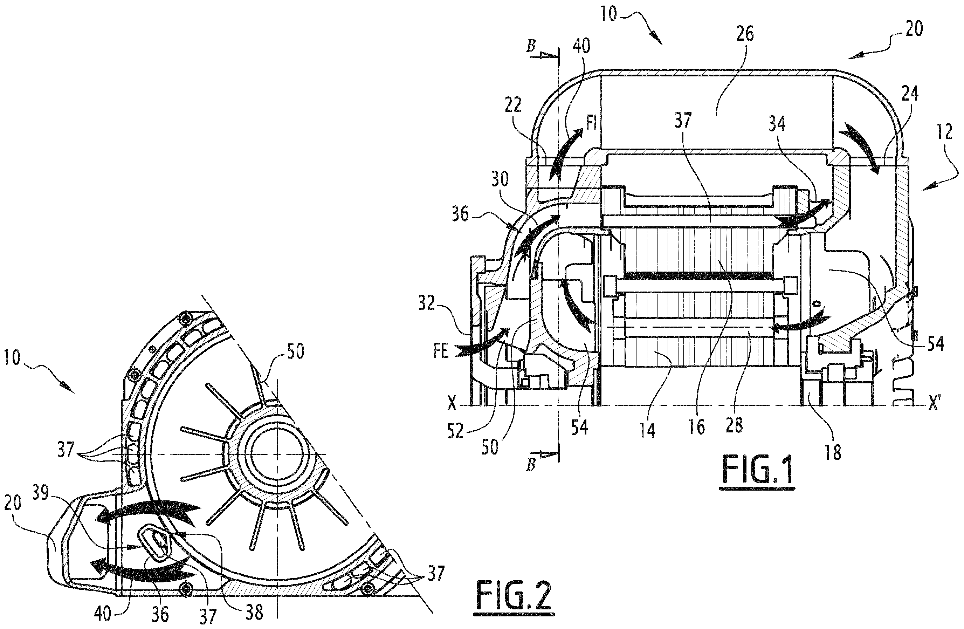

On a représenté, sur les figures 1 et 2, un moteur électrique 10 selon un premier mode de réalisation de l'invention. Le moteur électrique 10 comprend un bâti 12 définissant un volume interne au moteur 10 dans lequel est logé un rotor 14 et un stator 16. Le rotor 14 est monté solidaire en rotation sur un arbre de rotation 18 à l'intérieur du bâti 12 et monté mobile en rotation autour d'un axe de rotation X-X' par rapport au stator 16. Le stator 16 entoure le rotor 14 parallèlement à l'axe de rotation X-X' à l'intérieur du bâti 12. De façon classique, le rotor 14 et le stator 16 permettent de transformer une énergie électrique dans une énergie mécanique délivrée par l'arbre 18 du rotor 14.

Selon un mode de réalisation, un circuit 30 de refroidissement primaire comporte une entrée 32 primaire et une sortie 34 primaire, chacune étant en communication fluidique avec l'extérieur du bâti 12. Par-là, on entend que l'air ambiant est apte à pénétrer dans le circuit 30 de refroidissement primaire par l'entrée 32 primaire et à retourner vers l'extérieur par la sortie 34 primaire. L'entrée 32 primaire et la sortie 34 primaire sont reliées entre elles par au moins une conduite primaire 37 traversant le stator 16 et s'étendant par exemple selon un axe sensiblement parallèle à l'axe de rotation X-X'.

Le circuit 30 de refroidissement primaire, représenté sur la figure 1, permet à un fluide gazeux, c'est-à-dire l'air ambiant, provenant de l'extérieur du bâti 12 de s'engouffrer dans l'entrée 32 primaire. Le fluide gazeux externe FE est guidé par le circuit 30 de refroidissement primaire au travers du volume interne du bâti 12 et plus particulièrement au travers du stator 16 pour refroidir ce dernier. La conduite primaire 37 permet en effet un échange thermique entre le fluide gazeux externe FE et le stator 16. La sortie 34 primaire permet finalement d'évacuer le fluide gazeux externe FE réchauffé vers l'extérieur du bâti 12. Ainsi, le bâti 12 et le stator 16 sont refroidis par l'air ambiant provenant de l'environnement du moteur 10.

Dans la présente description, les termes « amont » et « aval » sont définis par rapport au sens de circulation d'un flux de fluide gazeux dans le moteur 10.

Un circuit 40 de refroidissement secondaire, représenté sur la figure 1, comprends au moins un tunnel 28. Ce tunnel 28 est raccordé à ses extrémités par deux passages radiaux à l'entrée 22 et la sortie 24 du dispositif 20 de refroidissement. Le tunnel 28 s'étend sensiblement parallèlement à l'axe de rotation X-X', et forme ainsi au moins une ouverture au travers le rotor 14.

Le circuit 40 est isolé du circuit 30 de refroidissement primaire, c'est-à-dire qu'il n'y a pas de communication fluidique entre le circuit de refroidissement primaire et le circuit de refroidissement secondaire. Un fluide gazeux intérieur FI remplit le circuit 40 de refroidissement secondaire. Ce fluide gazeux, par exemple de l'air, est isolé de l'air ambiant car il n'y a pas de communication fluidique entre le circuit de refroidissement secondaire et l'extérieur du bâti.

Un dispositif 20 de refroidissement extérieur au bâti 12 est raccordé par une entrée d'air 22 secondaire et une sortie d'air 24 secondaire au circuit de refroidissement secondaire s'étendant dans le volume interne du bâti. L'entrée d'air 22 secondaire et la sortie d'air 24 secondaire sont en communication fluidique l'une avec l'autre et sont reliées par une conduite secondaire 26.

L'arbre 18 du rotor 14 est équipé d'un ventilateur 50 comportant au moins deux pales 54 secondaires aptes à faire circuler le fluide gazeux intérieur FI à l'intérieur du circuit 40 secondaire et du dispositif 20 de refroidissement. La circulation du fluide gazeux est appelée flux gazeux secondaire. Les pales 54 secondaires sont par exemple situées en amont de l'entrée 22 secondaire du dispositif 20 de refroidissement et en aval de la sortie 24 secondaire du dispositif 20 de refroidissement. Le ventilateur 50 est par exemple un ventilateur radial s'étendant dans le volume interne du bâti 12 du moteur 10. Ainsi, un flux gazeux intérieur est créé menant le fluide gazeux intérieur FI depuis le rotor 14 vers le dispositif 20 de refroidissement et depuis le dispositif 20 de refroidissement vers le rotor 14.

La circulation du fluide gazeux entre le circuit 40 de refroidissement secondaire et le dispositif 20 de refroidissement permet au fluide gazeux intérieur FI d'être refroidi dans le dispositif 20 de refroidissement par échange thermique entre l'intérieur du dispositif 20 de refroidissement et l'air ambiant puis de circuler dans le rotor 14 afin de refroidir celui-ci. Le fluide gazeux intérieur FI réchauffé lors de son passage par au moins un tunnel du rotor 14 est ensuite renvoyé vers le dispositif 20 de refroidissement externe où il est à nouveau refroidi par échange thermique avec l'air ambiant lors de son passage par la conduite secondaire 26 du dispositif 20 de refroidissement. Ainsi, le rotor 14 est refroidi par le fluide gazeux interne FI.

Selon un mode de réalisation, le ventilateur 50 est également agencé pour favoriser la circulation de l'air dans le circuit de refroidissement primaire, par exemple au moyen d'au moins une pale 52 primaire apte à créer un flux gazeux primaire destiné à circuler dans le circuit 30 de refroidissement primaire. La pale 52 primaire est par exemple située en aval de l'entrée 32 primaire et en amont de la conduite primaire 37 du circuit 30 de refroidissement primaire. Ainsi, le ventilateur 50 permet de créer simultanément un flux gazeux dans le circuit 30 de refroidissement primaire et un flux gazeux dans le circuit 40 de refroidissement secondaire.

Les pales 54 secondaires présentent chacune un diamètre supérieur à la pale 52 primaire. Ainsi, la pression à l'intérieur du circuit 40 de refroidissement secondaire est supérieure à la pression à l'intérieur circuit 30 de refroidissement primaire. Dans ce cas, l'étanchéité est garantie entre le circuit 30 de refroidissement primaire et le circuit 40 de refroidissement secondaire.

Selon l'invention, le circuit 40 de refroidissement secondaire est traversé par un canal 36 du circuit 30 de refroidissement primaire alimentant le stator 16 avec le fluide gazeux externe. Le canal 36 est par exemple interposé entre l'entrée 32 primaire et la conduite 37 traversant le stator 16, c'est-à-dire que le canal 36 est en communication fluidique, d'une part, avec l'entrée 32 primaire du circuit 30 de refroidissement primaire et d'autre part avec la conduite 37 traversant le stator 16. Un tel canal 36 permet de faire se croiser le circuit 40 de refroidissement secondaire et le circuit 30 de refroidissement primaire sans avoir à interrompre ou à réduire le diamètre du circuit 40 de refroidissement secondaire. De plus, le canal 36 forme une zone d'échange thermique supplémentaire entre le fluide gazeux externe FE circulant dans ledit canal 36 du circuit 30 de refroidissement primaire, et le fluide gazeux interne FI circulant dans le circuit 40 de refroidissement secondaire en plus de la zone d'échange thermique s'étendant au niveau du dispositif 20 de refroidissement.

Conformément au mode de réalisation décrit, le canal 36 présente un diamètre plus important qu'une conduite primaire 37 du circuit 30 de refroidissement primaire. Ceci permet d'alimenter plusieurs conduites primaires 37 du circuit 30 de refroidissement primaire simultanément avec le fluide gazeux externe. Le diamètre de la conduite primaire 37 est par exemple compris entre 10 et 50 mm. Par exemple, quarante conduites primaires 37 sont alimentées par le canal 36 du circuit 30 de refroidissement primaire.

Dans ce cas, le canal 36 permet une alimentation suffisante en fluide gazeux externe pour refroidir efficacement le stator 16 du moteur 10.

Comme cela est représenté sur la figure 2, le canal 36 traverse le circuit 40 de refroidissement secondaire de sorte à séparer un flux du fluide gazeux interne en deux flux passant respectivement sur un côté du canal 36. Les deux flux séparés du fluide gazeux interne sont ainsi refroidis par le canal 36.

Le canal 36 traverse le circuit 40 de refroidissement secondaire principalement dans une direction sensiblement parallèle à l'axe de rotation X-X' de l'arbre 18 du moteur 10.

Le canal 36 est situé en aval de l'entrée 32 primaire et en amont d'au moins une conduite primaire 37 du circuit de refroidissement primaire. Ainsi, il est garanti que le fluide gazeux externe traversant le canal 36 n'est pas encore chauffé par le stator 16 du moteur 10. Dans ce cas, le fluide gazeux externe peut refroidir le fluide gazeux interne par la conduite primaire 37.

Le canal 36 réduit localement le volume du circuit 40 de refroidissement secondaire et crée ainsi un effet Venturi dans le circuit 40 de refroidissement secondaire. Par cet effet, le flux du fluide gazeux intérieur FI est accéléré au niveau du canal 36, ce qui permet une augmentation de l'échange thermique entre le canal 36 et le fluide gazeux intérieur FI.

Le canal 36 du circuit 30 de refroidissement primaire traverse le circuit 40 de refroidissement secondaire en amont du dispositif 20 de refroidissement du circuit 40 de refroidissement secondaire. Ceci permet que le fluide gazeux interne FI du circuit 40 de refroidissement secondaire soit refroidi par le canal 36.

Selon l'invention, le canal 36 présente une section de forme prismatique avec un sommet 38 s'étendant vers l'amont du fluide gazeux interne FI du circuit 40 de refroidissement secondaire et une base 39 s'étendant vers l'aval de ce fluide gazeux interne FI, comme représenté sur la figure 2. Ainsi, les perturbations du flux gazeux par le canal 36 sont réduites.

Dans un second mode de réalisation non représenté, plusieurs dispositifs 20 de refroidissement sont agencés autour du bâti 12 du moteur 10. Chaque dispositif 20 de refroidissement est en communication fluidique avec le ou un circuit 40 de refroidissement secondaire. Tous les circuits 40 de refroidissement secondaire traversent le rotor 14 du moteur 10. Ainsi, le refroidissement du moteur 10, en particulier du rotor 14, est augmenté. Ceci permet d'augmenter le niveau de performance du moteur 10, tout en garantissant un refroidissement optimal, efficace et simple.

Le refroidissement total du moteur 10 produit par le circuit 30 de refroidissement primaire et par le circuit 40 de refroidissement secondaire présente au moins une puissance de 12 kW.

La puissance mécanique délivrée par l'arbre 18 du moteur 10 est au moins de 400 kW.

## Revendications

1. Moteur (10) électrique, comprenant :
- un bâti (12) définissant un volume interne dans lequel est logé un rotor (14) et un stator (16),
- au moins un circuit (30) de refroidissement primaire traversant le stator (16), comprenant une entrée (32) primaire et une sortie (34) primaire en communication fluidique avec l'extérieur du bâti (12), un fluide gazeux provenant de l'extérieur du bâti (12) pénétrant par ladite entrée primaire étant destiné à circuler dans ledit circuit de refroidissement primaire et à sortir dudit circuit par ladite sortie primaire,
- au moins un dispositif (20) de refroidissement extérieur au bâti (12) comprenant une entrée d'air (22) secondaire et une sortie d'air (24) secondaire, ladite entrée secondaire et ladite sortie secondaire étant en communication fluidique avec le volume interne du bâti (12), une conduite (26), reliant ladite entrée secondaire et ladite sortie secondaire, s'étendant au moins en partie à l'extérieur du bâti (12),
- au moins un circuit (40) de refroidissement secondaire, séparé du circuit (30) primaire, traversant le rotor (14) et en communication fluidique avec l'entrée secondaire et la sortie secondaire du dispositif (20) de refroidissement, un fluide gazeux interne au circuit (40) de refroidissement secondaire étant destiné à circuler dans ledit circuit de refroidissement secondaire et dans ledit dispositif de refroidissement extérieur,
le circuit (40) de refroidissement secondaire étant traversé par un canal (36) du circuit (30) de refroidissement primaire alimentant le stator (16) avec le fluide gazeux provenant de l'extérieur du bâti (12) le canal (36) traversant le circuit (40) de refroidissement secondaire transversalement de sorte à séparer un flux gazeux secondaire circulant dans le circuit de refroidissement secondaire en deux flux passant autour du canal (36),
**caractérisé en ce que**
le canal (36) comporte une section de forme prismatique avec un sommet (38) vers l'amont du flux gazeux secondaire et une base (39) vers l'aval.

2. -Moteur (10) selon l'une quelconque des revendications 1, dans lequel le canal (36) traverse le circuit (40) de refroidissement secondaire principalement dans une direction sensiblement parallèle à un axe de rotation (X-X') d'un arbre (18) du moteur (10).

3. Moteur (10) selon l'une quelconque des revendications 1 à 2, dans lequel le canal (36) est agencé entre l'entrée (32) primaire et une partie du circuit (30) de refroidissement primaire traversant le stator (16).

4. Moteur (10) selon l'une quelconque des revendications 1 à 3, dans lequel plusieurs dispositifs (20) de refroidissement extérieur au bâti (12) sont agencés autour du bâti.

5. Moteur (10) selon l'une quelconque des revendications 1 à 4, dans lequel un ventilateur (50) radial est monté sur l'arbre (18) du moteur (10) pour accélérer le flux gazeux secondaire dans le circuit (40) de refroidissement secondaire.

6. Moteur (10) selon la revendication 5, dans lequel le ventilateur (50) radial permet d'accélérer simultanément un flux gazeux primaire dans le circuit (30) de refroidissement primaire et le flux gazeux secondaire dans le circuit (40) de refroidissement secondaire.

7. -Moteur (10) selon la revendication 1, dans lequel le ventilateur (50) est configuré pour faire circuler un flux gazeux primaire dans le circuit (30) de refroidissement primaire au moyen d'au moins une pale primaire (52), et pour faire circuler le flux gazeux secondaire à l'intérieur du circuit (40) secondaire et du dispositif (20) de refroidissement au moyen d'au moins deux pales secondaires (54), où les pales (54) secondaires présentent chacune un diamètre supérieur à la pale (52) primaire de sorte que la pression à l'intérieur du circuit (40) de refroidissement secondaire est supérieure à la pression à l'intérieur circuit (30) de refroidissement primaire.

## Patentansprüche

1. Elektromotor (10), aufweisend:
- ein Gehäuse (12), welches ein inneres Volumen definieren, in welchem ein Rotor (14) und ein Stator (16) untergebracht sind,
- mindestens einen den Stator (16) durchquerenden Primärkühlkreis (30), welcher einen Primäreingang (32) und einen Primärausgang (34), welche in Fluidverbindung mit der Außenseite des Gehäuses (12) stehen, aufweist, wobei ein von außerhalb des Gehäuses (12) kommendes, gasförmiges Fluid, welches durch den Primäreingang eindringt, dazu bestimmt ist, in dem Primärkühlkreis zu zirkulieren und den Kreis durch den Primärausgang zu verlassen,
- mindestens eine Kühlvorrichtung (20) außerhalb des Gehäuses (12), welche einen Sekundäreingang für Luft (22) und einen Sekundärausgang für Luft (22) aufweist, wobei der Sekundäreingang und der Sekundärausgang mit dem inneren Volumen des Gehäuses (12) in Fluidverbindung stehen, wobei sich eine Leitung (26), welche den Sekundäreingang und den Sekundärausgang verbindet, zumindest teilweise außerhalb des Gehäuses (12) erstreckt,
- mindestens einen Sekundärkühlkreis (40), welcher von dem Primärkreis (30) getrennt ist, den Rotor (14) durchquert und in Fluidverbindung mit dem Sekundäreingang und dem Sekundärausgang der Kühlvorrichtung (20) steht, wobei ein sic hin dem Sekundärkühlkreis (40) befindliches, gasförmiges Fluid dazu bestimmt ist, in dem Sekundärkühlkreis und in der außerhalb liegenden Kühlvorrichtung zu zirkulieren,
wobei der Sekundärkühlkreis (40) durch einen Kanal (36) des Primärkühlkreises (30) durchquert wird, welcher den Stator (16) mit dem von außerhalb des Gehäuses (12) kommenden, gasförmigen Fluid versorgt, wobei der Kanal (36) den Sekundärkühlkreis (40) transversal derart durchquert, dass ein Sekundärgasstrom, welcher in dem Sekundärkühlkreis zirkuliert, in zwei Ströme, welche um den Kanal (36) herum strömen, getrennt wird,
**gekennzeichnet dadurch, dass**
der Kanal (36) einen Querschnitt von prismatischer Gestalt mit einem Scheitel (38) stromaufwärts des Sekundärgasstroms und einer Basis (39) stromabwärts aufweist.

2. Motor (10) gemäß irgendeinem der Ansprüche 1, wobei der Kanal (36) den Sekundärkühlkreis (40) hauptsächlich in einer Richtung, welche im Wesentlichen parallel zu einer Rotationsachse (X-X') einer Welle (18) des Motors (10) ist, durchquert.

3. Motor (10) gemäß irgendeinem der Ansprüche 1 bis 2,
wobei der Kanal (36) zwischen dem Primäreingang (32) und einem Teil des den Stator (16) durchquerenden Primärkühlkreis (30) angeordnet ist.

4. Motor (10) gemäß irgendeinem der Ansprüche 1 bis 3,
wobei mehrere Kühlvorrichtungen (20) außerhalb des Gehäuses (12) um das Gehäuse herum angeordnet sind.

5. Motor (10) gemäß irgendeinem der Ansprüche 1 bis 4,
wobei ein Radiallüfter (50) auf der Welle (18) des Motors (10) angebracht ist, um den Sekundärgasstrom in dem Sekundärkühlkreis (40) zu beschleunigen.

6. Motor (10) gemäß dem Anspruch 5,
wobei der Radiallüfter (50) es erlaubt, gleichzeitig einen Primärgasstrom in dem Primärkühlkreis (30) und den Sekundärgasstrom in dem Sekundärkühlkreis (40) zu beschleunigen.

7. Motor (10) gemäß dem Anspruch 1, wobei der Lüfter (50) dazu eingerichtet ist, einen Primärgasstrom in dem Primärkühlkreis (30) mittels mindestens einer Primärschaufel (52) zirkulieren zu lassen und den Sekundärgasstrom innerhalb des Sekundärkreises (40) und der Kühlvorrichtung (20) mittels mindestens zwei Sekundärschaufel (54) zirkulieren zu lassen, wobei die Sekundärschaufeln (54) jeweils einen Durchmesser, welcher größer als die Primärschaufel (52) ist, haben, so dass der Druck innerhalb des Sekundärkühlkreises (40) größer ist als der Druck innerhalb des Primärkühlkreises (30).

## Claims

1. An electric motor (10), comprising:
- a frame (12) defining an internal volume in which are housed a rotor (14) and a stator (16),
- at least one primary cooling circuit (30) crossing the stator (16), comprising a primary inlet (32) and a primary outlet (34) in fluidic communication with the outside of the frame (12), a gas fluid from the outside of the frame (12) penetrating through said primary inlet being intended to circulate in said primary cooling circuit and to leave said circuit through said primary outlet,
- at least one cooling device (20) outside the frame (12) comprising a secondary air inlet (22) and a secondary air outlet (24), said secondary inlet and said secondary outlet being in fluidic communication with the internal volume of the frame (12), a conduit (26), connecting said secondary inlet and said secondary outlet, extending at least partly outside the frame (12),
- at least one secondary cooling circuit (40), separate from the primary circuit (30), crossing the rotor (14) and in fluidic communication with the secondary inlet and the secondary outlet of the cooling device (20), a gas fluid internal to the secondary cooling circuit (40) being intended to circulate in said secondary cooling circuit and in said outer cooling device,
the secondary cooling circuit (40) being crossed by a channel (36) of the primary cooling circuit (30) supplying the stator (16) with the gas fluid from the outside of the frame (12), the channel (36) crossing transversely the secondary cooling circuit (40) so as to separate a secondary gas flow flowing in the secondary cooling channel into two gas flows flowing around the channel (36) ;
**characterized in that** the channel (36) comprises a section of prismatic shape with an apex (38) turned upstream the secondary gas fluid and a base (39) turned downstream

2. The motor (10) according to claim 1 , wherein the channel (36) crosses the secondary cooling circuit (40) mainly in a direction substantially parallel with an axis of rotation (X-X') of a shaft (18) of the motor (10).

3. The motor (10) according to any of claims 1 to 2, wherein the channel (36) is laid out between the primary inlet (32) and a portion of the primary cooling circuit (30) crossing the stator (16).

4. The motor (10) according to any of claims 1 to 3, wherein several cooling devices (20) outside the frame (12) are arranged around the frame.

5. The motor (10) according to any of claims 1 to 4, wherein a radial fan (50) is mounted on the shaft (18) of the motor (10) in order to accelerate the secondary gas flow in the secondary cooling circuit (40).

6. The motor (10) according to claim 5, wherein the radial fan (50) allows simultaneous acceleration of a primary gas flow in the primary cooling circuit (30) and the secondary gas flow in the secondary cooling circuit (40).

7. The motor (10) according to claim 1, wherein the fan (50) is configured to make a primary gas flow circulate in the primary cooling circuit (30) through at least a primary blade (52) and to make the secondary gas flow circulate into the secondary circuit (40) and into the cooling device (20) through at least two secondary blades (54), where the secondary blades (54) each have a diameter greater than that of the primary blade (52), so that the pressure inside the secondary cooling circuit (40) is greater than the pressure inside the primary cooling circuit (30).
